# EUROPÄISCHE PATENTSCHRIFT

(11) **EP 3 628 490 B1**
(45) Veröffentlichungstag und Bekanntmachung des Hinweises auf die Patenterteilung: **20.07.2022**
(21) Anmeldenummer: 19195259.7
(22) Anmeldetag: 04.09.2019
(51) Int. Cl.: B41F 33/00

(54) **VERBESSERTE DRUCKPLATTENLOGISTIK**
IMPROVED PRINTING PLATE LOGISTICS
LOGISTIQUE DE PLAQUE D'IMPRESSION AMÉLIORÉE

(30) Priorität: 26.09.2018 DE 102018216421
(43) Veröffentlichungstag der Anmeldung: 01.04.2020
(73) Patentinhaber: Heidelberger Druckmaschinen AG, 69115 Heidelberg (DE)
(72) Erfinder: Epp, Sascha, 74889 Sinsheim-Eschelbach (DE)

(56) Entgegenhaltungen:
- EP-A2- 2 420 384
- WO-A1-2010/046424
- US-A1- 2007 272 105

## Beschreibung

Die Erfindung betrifft ein Verfahren zur verbesserten Bereitstellung von Druckplatten für den Druckprozess von Offset-Druckmaschinen.

Die Erfindung liegt im technischen Gebiet der Druckereilogistik.

Beim Betrieb einer Druckerei, welche in der Hauptsache Offset-Druckmaschinen einsetzt, stellt die Logistik der Druckplatten für die Offset-Druckmaschinen ein entscheidendes Kriterium für die Effizienz der Druckerei dar. Zur Steigerung dieser Effizienz werden auch in Druckereien immer mehr Prozesse automatisiert. Hinsichtlich der Druckplatten werden z.B. zunehmend Druckplattenbelichter mit automatischem Platteneinzug, Entwicklung und Ablage auf einem Plattenwagen eingesetzt. Der Plattenwagen transportiert die so erzeugten Druckplatten dann vom Druckplattenbelichter zu der bzw. den für den Druckprozess ausgewählten Offset-Druckmaschinen. An der Druckmaschine sind dann vom Drucker mit den Druckplatten verschiedene Arbeitsgänge an der Druckmaschine durchzuführen, um damit den Druckprozess durchführen zu können. Dies umfasst zum einen das Rüsten der Offset-Druckmaschine mit den benötigten Druckplatten selbst. Zum andern jedoch auch das Einrichten der Druckmaschine für den Fortdruck inklusive des Druckens der dafür notwendigen Makulatur-Bögen. Zu guter Letzt muss natürlich auch der eigentliche Druckvorgang, der sogenannte Fortdruck, durchgeführt werden.

Damit hierfür keine Effizienzverluste auftreten, werden die einzelnen Arbeitsgänge für den Druckprozess sowie auch die Erzeugung der Druckplatten beim Druckplattenbelichter so durchgeplant, dass jede Druckmaschine möglichst lückenlos drucken kann. Daraus resultieren Planzeiten, an denen sich die Herstellung der Druckplatten entsprechend orientieren muss.

Zur Effizienzsteigerung sind hierfür aus dem Stand der Technik verschiedene Ansätze und Konzepte bekannt. So ist z.B. aus der noch unveröffentlichten europäischen Patentanmeldung EP 18 170 503 ein Verfahren zur Herstellung von belichteten Druckplatten für einen Druckprozess an mindestens einer Offset-Druckmaschine bekannt, bei welchen in der Vorstufe durch einen Vorstufenrechner die digitalen Farbauszugsdaten, aus denen dann die entsprechenden Druckplatten für den Druckprozess erstellt werden, bereits so vorsortiert und aus mehreren Druckaufträgen zusammengefasst werden, dass am Druckplattenbelichter die erzeugten belichteten Druckplatten bereits in einer Reihenfolge produziert und damit auch auf dem Plattenwagen abgelegt werden, in welche sie an der betreffenden Druckmaschine zum Rüsten der Druckmaschine und zum Durchführen des Druckauftrages auch benötigt werden. Dieses Verfahren greift also bereits in der Vorstufe ein, manipuliert die Vorstufendaten unter den Gesichtspunkten, dass eine möglichst effiziente Sortierung der erzeugten, belichteten Druckplatten auf dem Plattenwagen gewährleistet wird. Dieses Verfahren basiert darauf, dass sämtliche Druckaufträge bereits bekannt sind und somit vom Vorstufen-/Workflowsystem dann dementsprechend effizient sortiert werden können. Was mit den erzeugten Druckplatten nach der Ablage in der entsprechenden Reihenfolge auf dem Plattenwagen passiert, ist für diesen Ansatz nicht von Belang. Es handelt sich somit hier um kein vollständiges Logistiksystem. Falls die Reihenfolge der Druckauftrage nicht bekannt ist oder eine Vorsortierung aus anderen Gründen nicht möglich ist, kann dieses Verfahren nicht angewandt werden.

Die EP 2 420 384 A2 offenbart ein Logistiksystem zum Transport von Druckplatten, in welchem die Reihenfolge der Druckplatten beim Transport überprüft wird.

Ferner ist aus der US 2007/272105 A1 eine Vorrichtung bzw. ein Verfahren zum Transport belichteter Druckplatten bekannt, wobei der dem Transport dienenden Plattenwagen mittels einer ID eindeutig bestimmt wird.

Ein anderer Stand der Technik ist das von der Firma NELA eingesetzte System, bei welchem sämtliche Druckplatten mit einem zweidimensionalen Code versehen werden.

Die Druckplatten an sich werden im Druckplattenbelichter jedoch unsortiert ausgegeben und erst später anhand des zugehörigen zweidimensionalen Codes sortiert. Nachteilig bei diesem System ist jedoch, dass keine Synchronisation zur Steuerung der Offset- Druckmaschine besteht. D.h., es werden zwar die Druckplatten anhand des aufgebrachten 2D-Codes sortiert, dies läuft jedoch unabhängig und zusätzlich zum eigentlichen Rüstvorgang der Offset-Druckmaschine mit den entsprechenden Druckplatten. Die Maschinensteuerung erhält also keinerlei Informationen über die entsprechende Reihenfolge der Druckplatten und kann somit auch nicht beim Durchführen des Rüstvorganges den Drucker anleiten bzw. ihm assistieren. Dies lässt weiteren Spielraum für eine Effizienzverbesserung bei der Abarbeitung von Druckaufträgen in der entsprechenden Druckerei zu.

Ein weiteres verwandtes System wird in der Druckerei Aumüller in Regensburg angewandt. Aumüller macht hier bei der aktuellen Arbeitsweise keine Detailplanung; sie belichten immer eine Anzahl an Druckplatte für eine definierte Arbeitszeit und bringen diese zu der Druckmaschine. Am Ende dieser Arbeitszeit, z.B. einer halben Schicht oder ganze Schicht, müssen diese Jobs abgearbeitet sein.

Der Helfer stellt dabei die Druckplatten an der Druckmaschine ab und teilt dem Drucker dann die Druckreihenfolge mit. Dieser lädt dann aus dem Workflow die Jobs in der richtigen Reihenfolge. Hier sind alle Druckmaschinen zum "Verbund" zusammen geschaltet, so dass jeder Druckermaschine alle Auftragsdaten von jedem Auftrag zur Verfügung stehen, da erst bei der Druckplattenverteilung entschieden wird auf welcher Druckmaschine die Aufträge gedruckt werden. Deshalb stehen an der Druckmaschine lange Auftragslisten zur Verfügung und der Drucker muss mittels eines Filters sich alle Aufträge herausfiltern, die er nun drucken möchte, bzw. die Aufträge heraus suchen, zu denen der Helfer die Druckplatten an der Maschine bereit gestellt hat. Dies bedeutet einen Zeitaufwand. Des Weiteren bringt dies auch ein Risiko mit sich, da evtl. die Reihenfolge beim manuellen Laden vertauscht werden können.

Die Aufgabe der vorliegenden Erfindung besteht somit darin, ein Verfahren zur Druckplattenlogistik für den Betrieb von Offset-Druckmaschinen zu offenbaren, welches eine weitre Effizienzsteigerung bei der Abarbeitung von Druckaufträgen auf diesen Druckmaschinen ermöglicht.

Gelöst wird diese Aufgabe durch ein Verfahren gemäß Anspruch 1 gelöst, nämlich ein Verfahren zur Herstellung von belichteten Druckplatten für einen Druckprozess mindestens einer Offsetdruckmaschine durch einen Rechner eines Workflowsystems, wobei der Rechner in der Druckvorstufe Druckauftragsdaten sammelt, daraus dann einen Satz digitaler Farbauszugsdaten zur Erstellung von Druckplatten für die Farbauszüge generiert, diese an mindestens einen Plattenbelichter schickt, wo die betreffenden, belichteten Druckplatten erzeugt werden, von wo sie dann als mindestens ein Druckplattenstapel mittels mindestens eines Plattenwagens zu ihrer jeweiligen, mindestens einen Offsetdruckmaschine transportiert werden und wobei die mindestens eine Offsetdruckmaschine mit den erzeugten belichteten Druckplatten den Druckprozess durchführt und wobei dem Plattenwagen eine eindeutige, im Workflowsystem registrierte ID zugewiesen wird, unter welcher im Workflowrechner die Anordnung der erstellten Druckplatten gespeichert ist, der Plattenwagen bei Ankunft an der Offsetdruckmaschine mit seiner ID dort registriert wird, ein Steuerungsrechner der Offsetdruckmaschine mittels der ID die Druckauftragsdaten aus dem Workflowsystem lädt und einen Anwender damit zur Durchführung des jeweiligen Druckauftrages anleitet, welches dadurch gekennzeichnet ist, dass der Steuerungsrechner der Offsetdruckmaschine die Druckauftragsdaten in der Reihenfolge aus dem Workflowsystem lädt, in welcher der Anwender die Druckplatten zur Abarbeitung des Druckauftrages vom jeweiligen Plattenwagen entnehmen muss und der Steuerungsrechner der Offsetdruckmaschine parallel überprüft, ob die Reihenfolge der Druckplatten mit der Farbzuordnung von Druckwerken der Offsetdruckmaschine übereinstimmt und bei Nichtübereinstimmung den Anwender über optisches oder akustisches Signal darauf hinweist.

Der entscheidende Unterschied zum bisherigen Stand der Technik liegt also darin, dass beim erfindungsgemäßen Verfahren die erzeugten Druckplatten vom Beginn ihrer Belichtung im Druckplattenbelichter an überwacht und getrackt werden, so dass das Workflowsystem jederzeit weiß, welche Druckplatte von welchem Druckauftrag sich auf welchem Plattenwagen befindet und zu welcher Offset-Druckmaschine transportiert wird, um mittels der Verbindung zur Maschinensteuerung der betreffenden Offset-Druckmaschine dem Anwender genaue Handlungsvorschriften zur Durchführung von den notwendigen Arbeitsgängen geben kann, damit dieser die Abarbeitung des Druckauftrages so effizient wie möglich durchführen kann. Dabei spielt es erst einmal keine Rolle, ob die Druckplatten aus dem Druckplattenbelichter bereits in einer vorsortierten Reihenfolge dem Plattenwagen übergeben werden oder ob diese zufällig hinsichtlich ihrer Reihenfolge ausgegeben werden und zur Druckmaschine transportiert werden. Dadurch, dass das Workflowsystem jederzeit weiß, wo sich jede Druckplatte befindet und mit der jeweiligen Druckmaschinensteuerung verbunden ist, kann es den Drucker unabhängig von der realen, auf dem Plattenwagen vorhandenen Reihenfolge der Druckplatten, hinsichtlich einer möglichst effizienten Rüstung der Maschine mit diesen Druckplatten anleiten. Natürlich schließt das erfindungsgemäße Verfahren eine Vorsortierung der Druckplatten aufgrund einer Vorsortierung der einzelnen Farbauszüge der Druckauftragsdaten, die an den Druckplattenbelichter gehen, wie sie ja aus dem Stand der Technik bereits bekannt ist, nicht aus, sondern diese kann durchaus zur weiteren Effizienzsteigerung mit dem erfindungsgemäßen Verfahren verbunden werden. Vorteilhafte und daher bevorzugte Weiterbildungen des Verfahrens ergeben sich aus den zugehörigen Unteransprüchen sowie aus der Beschreibung mit den zugehörigen Zeichnungen.

Eine bevorzugte Weiterbildung des erfindungsgemäßen Verfahrens ist dabei, dass ein maschinenlesbarer Code auf jede Druckplatte belichtet oder per zusätzlicher Inkjet-Einheit auf jede Druckplatte gedruckt wird, welcher die Information über die Zuweisung zu einem Druckauftrag und zu einem Farbauszug beinhaltet. Dieser maschinenlesbare Code ermöglicht somit die Weitergabe dieser bestimmten Informationen hinsichtlich Farbauszug und zugehörigem Druckauftrag und kann für verschiedenste Weiterverarbeitungszwecke verwendet werden. Er ist jedoch kein notwendiger Bestandteil des erfindungsgemäßen Verfahrens, sondern ermöglicht lediglich zusätzliche Verwendungen. Der maschinenlesbare Code kann dabei praktischerweise gleich mit auf die Druckplatte belichtet werden. Die Information über den entsprechenden Farbauszug, den diese Druckplatte repräsentiert sowie den zugehörigen Druckauftrag sollten zu diesem Zeitpunkt der Belichtung der Druckplatte im Plattenbelichter bereits bekannt sein und kann somit gleich bei der Belichtung mit aufgebracht werden. Es kann jedoch auch eine separate Codier-Einrichtung verwendet werden, wie z.B. ein reiner Inkjet-Druckkopf. Dieser weist gegenüber der Belichtung des maschinenlesbaren Codes auf der Druckplatte den Vorteil auf, dass er sehr kurzfristig und flexibel angesteuert werden kann.

Eine weitere bevorzugte Weiterbildung des erfindungsgemäßen Verfahrens ist dabei, dass die Zuweisung des Plattenwagens zur ID durch Anbringen eines RFID-Chips am Plattenwagen, durch einen maschinenlesbaren Code am Plattenwagen, durch Eingabe der ID am Steuerungsrechner der Offsetdruckmaschine durch den Bediener oder durch Scannen eines maschinenlesbaren Codes auf einer der erstellten Druckplatten geschieht. Damit das erfindungsgemäße Verfahren ordentlich funktioniert, muss die ID des Plattenwagens, welcher die betreffenden Druckplatten zu einer bestimmten Offset- Druckmaschine transportiert, dem Steuerungsrechner dieser Offset-Druckmaschine kenntlich gemacht werden. Dies kann z.B. durch einen im Plattenwagen installierten RFID-Chip geschehen, welcher dann bei Ankunft einer Druckmaschine automatisiert ausgelesen wird. Dies kann auch geschehen, indem der Plattenwagen selber einen maschinenlesbaren Code, z.B. einen QR-Code oder einen Barcode aufweist, welcher dann durch einen Scanner an der Druckmaschine ausgelesen wird. Es ist jedoch ebenfalls möglich, einfach den maschinenlesbaren Code, welcher sich auf den Druckplatten befindet, auszulesen. Der Steuerungsrechner der Druckmaschine kann mit einem einzigen maschinenlesbaren Code der verschiedenen sich auf dem Plattenwagen befindlichen Druckplatten, über seine Verbindung zum Workflowsystem ebenfalls den entsprechenden Druckauftrag bestimmen, da der auf der Druckplatte befindliche maschinenlesbare Code ja diese Information enthält und somit über das Workflowsystem sämtliche, zur Anleitung des Druckers bezüglich der Druckmaschine notwendigen Informationen erhalten und diese ihm anzeigen.

Eine weitere bevorzugte Weiterbildung des erfindungsgemäßen Verfahrens ist dabei, dass die Information, dass eine Druckplatte auf einem Plattenwagen abgelegt wurde, einschließlich der Information über die Position der Druckplatte im Druckplattenstapel auf dem Plattenwagen, auf dem Workflowrechner gespeichert wird. Die Reihenfolge, in welcher die Druckplatten auf dem entsprechenden Plattenwagen abgelegt werden, wird also im erfindungsgemäßen Verfahren vom Workflowsystem nicht vorherbestimmt, sondern ist diesem lediglich bekannt. Wie bereits erläutert, schließt das natürlich eine aktive Vorsortierung der Platten durch gezielte Vorsortierung der Druckauftragsdaten hinsichtlich der Farbauszüge, für welche die Druckplatten erzeugt werden, nicht aus. Es ist aber eben kein entscheidendes Kriterium. Die Reihenfolge ist dem Workflowsystem bekannt, da die Vorbereitung der Auftragsdaten und das Senden dieser an den Druckplattenbelichter ja vom Workflowsystem selber überwacht werden und die Reihenfolge wird dann durch das Laden der ID des Plattenwagens durch den Steuerungsrechner der Offset-Druckmaschine dem Steuerungsrechner zur Verfügung gestellt. D.h., sobald der Plattenwagen die Offset-Druckmaschine erreicht, wird die ID des Plattenwagens dem Steuerungsrechner der Offset-Druckmaschine übergeben, welcher dann aufgrund seiner Verbindung mit dem Workflowsystem automatisch die Reihenfolge der auf diesem Plattenwagen abgelegten Druckplatten erhält und aufgrund dieser Information den Drucker mittels verschiedenster Schnittstellen hinsichtlich der Rüstung der Offset- Druckmaschine mit diesen Druckplatten anleiten kann.

Erfindungsgemäß lädt der Steuerungsrechner der Offsetdruckmaschine die Druckauftragsdaten in der Reihenfolge aus dem Workflowsystem, in welcher der Anwender die Druckplatten zur Abarbeitung des Druckauftrages vom jeweiligen Plattenwagen entnehmen muss. Wie bereits erläutert, kann die Reihenfolge der Druckplatten auf dem Plattenwagen vom Workflowsystem bereits aktiv vorher vom Workflowsystem gesteuert werden, indem es die Vorstufendaten entsprechend anpasst und gezielt an den betreffenden Druckplattenbelichter schickt, oder aber die entsprechenden Druckauftragsdaten mit den Farbauszügen für die einzelnen Druckplatten werden einfach fortlaufend an den Druckplattenbelichter geschickt, was dann die entsprechende Reihenfolge der belichteten Druckplatten auf dem Plattenwagen nach sich zieht. Welche Vorgehensweise angewandt wird, hängt von den Möglichkeiten der betreffenden Druckerei ab. Das erfindungsgemäße Verfahren kann jedoch mit beiden Ansätzen umgehen.

Erfindungsgemäß überprüft der Steuerungsrechner parallel, ob die Reihenfolge der Druckplatten mit der Farbzuordnung von Druckwerken der Offsetdruckmaschine übereinstimmt und weist bei Nichtübereinstimmung den Anwender über optisches oder akustisches Signal darauf hin.

Die wichtigste Information, welche der Steuerungsrechner der Druckmaschine dem Drucker bezüglich der Anleitung zur Rüstung der Druckmaschine zur Verfügung stellen muss, ist natürlich der Abgleich der Reihenfolge der Druckplatten auf dem Plattenwagen mit der Farbzuordnung der Druckwerke der Offset-Druckmaschine. Da die belichteten Druckplatten sehr empfindlich sind und hinsichtlich der Rüstvorgänge an der Druckmaschine möglichst wenig bewegt werden sollten, ist eine sofortige korrekte Zuordnung zum richtigen Druckwerk der Offset-Druckmaschine angebracht. Indem der Steuerungsrechner die Reihenfolge der Druckplatten auf dem Plattenwagen in der Farbzuordnung der Druckwerke der Offset-Druckmaschine abgleicht, kann es dem Drucker somit sofort mitteilen, zu welchem Druckwerk welche Druckplatte gehört und somit eine möglichst effiziente Rüstung der Druckmaschine und bei gleichzeitiger Schonung der empfindlichen Druckplatten ermöglichen.

Eine weitere bevorzugte Weiterbildung des erfindungsgemäßen Verfahrens ist dabei, dass der mindestens eine Plattenwagen über einen rechnergestützten Sensor verfügt, welcher den maschinenlesbaren Code der obersten auf ihm gelagerten Druckplatte einliest, hinsichtlich Druckauftrag und Farbauszug auswertet und dann das, passende Druckwerk der betreffenden Offsetdruckmaschine automatisch ansteuert. Eine weitere Ausbaustufe des erfindungsgemäßen Verfahrens besteht darin, dass der Plattenwagen über einen Sensor verfügt. Dies ermöglicht, dass der Plattenwagen jeweils automatisiert durch Auslesen des maschinenlesbaren Codes auf der belichteten Druckplatte sofort erkennt, zu welchem Druckwerk diese entsprechende Druckplatte gehört und dann selbsttätig die betreffende Druckplatte zu diesem Druckwerk transportiert. Der Drucker muss dann lediglich die entsprechende Druckplatte noch in das jeweilige Druckwerk einspannen. Eine Fehlzuordnung von Druckplatten zu einem falschen Druckwerk kann somit, vorausgesetzt, dass keine falschen maschinenlesbaren Codes aufgebracht wurden, ausgeschlossen werden. Auch der Zeitbedarf für das Rüsten der jeweiligen Druckplatten lässt sich damit noch einmal reduzieren. Welcher Sensor dabei am Platenwagen angebracht wird, spielt für die Durchführung dieses Merkmals keine besondere Rolle. Üblicherweise wird ein Bildsensor eingesetzt, welcher zudem abhängig von der Art des verwendeten des maschinenlesbaren Codes auf der Druckplatte ist. Im Falle eines Barcodes kann es z.B. ein entsprechender Barcode-Scanner sein.

Eine weitere bevorzugte Weiterbildung des erfindungsgemäßen Verfahrens ist dabei, dass der mindestens eine Plattenwagen über ein Schienensystem oder über eine hängende Fördereinrichtung transportiert wird. Damit der Plattenwagen das passende Druckwerk der Offset-Druckmaschine, bei welchem die nächste oben liegende Druckplatte eingespannt werden soll, auch selbsttätig ansteuern kann, muss er natürlich ein entsprechendes Transportsystem aufweisen, welches dies ermöglicht. Das kann z.B. ein Schienenbeförderungssystem sein, wo entsprechende Schienen zu jedem Druckwerk jeder Offset-Druckmaschine, die in der Druckerei an diesem erfindungsgemäßen Verfahren teilhaben soll, verlegt sind. So dass dann der Plattenwagen auf diesen Schienen jeweils sämtliche Offset-Druckmaschinen und an diesen sämtliche betreffende Druckwerke ansteuern kann. Denkbar ist auch eine hängende Beförderungseinrichtung, welche an der Decke der Halle der Druckerei oder darunter entsprechend angebracht ist und an welche dann von oben die betreffenden Druckplatten zu den Druckwerken der betreffenden Offset-Druckmaschine transportiert werden.

Die Erfindung als solche sowie konstruktiv und/oder funktionell vorteilhafte Weiterbildungen der Erfindung werden nachfolgend unter Bezug auf die zugehörigen Zeichnungen anhand wenigstens eines bevorzugten Ausführungsbeispiels näher beschrieben. In den Zeichnungen sind einander entsprechende Elemente mit jeweils denselben Bezugszeichen versehen.

Die Zeichnungen zeigen:
- Figur 1: den ersten Schritt des schematischen Ablaufs des erfindungsgemäßen Datenhandlings im verwendeten Druckmaschinensystem
- Figur 2: den zweiten Schritt des schematischen Ablaufs des erfindungsgemäßen Datenhandlings im verwendeten Druckmaschinensystem
- Figur 3: den Überblick über Position des Sensors und Lage der belichteten Druckplatten am Plattenwagen

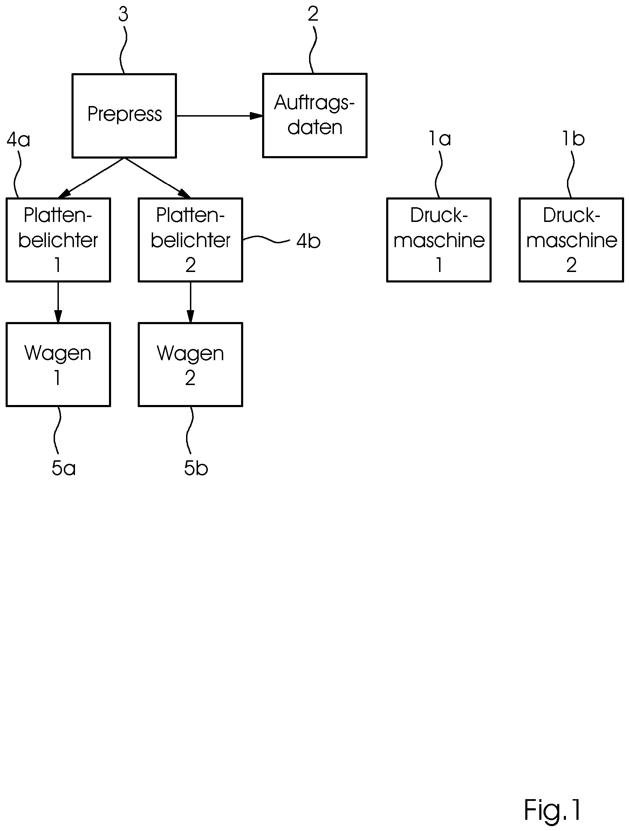

In der bevorzugten Ausführungsvariante wird die Druckplattenreihenfolge von Druckplatten 6 für Offsetdruckmaschinen 1a, 1b in einer Druckerei fortlaufend ausgegeben; d.h. so wie die Daten zu Verfügung stehen. Alternativ kann die Reihenfolge auch über eine Planungssoftware auf einem Rechner der Vorstufe 3 erfolgen. Für das erfindungsgemäße Verfahren ist das nicht von Belang. Wichtig ist nur, dass die Reihenfolge dem Workflowsystem der Druckerei bekannt ist. Danach wird diese Information vom Rechner des Workflowsystems einem Plattenwagen 5 zugewiesen. Durch Laden der Plattenwagen-ID werden die Druckaufträge 2 an der Druckmaschine 1a, 1b geladen und sortiert. Figur 1 zeigt hier beispielhaft den schematischen Aufbau hinsichtlich der verwendeten Druckmaschinen 1a, 1b in einer Druckerei und auch den ersten Schritt des Ablaufs des erfindungsgemäßen Verfahrens.

Bei der Plattenausgabe an einem der Druckplattenbelichter 4a, 4b der Druckerei wird ein vom Workflowsystem generierter, maschinenlesbarer Code mit auf die Druckplatte 6 belichtet. Dieser beinhaltet die nötige Information der Zuweisung zu einem Druckauftrag 2 und zu einem Farbauszug. Alternativ kann der Code über eine separate Codier Einrichtung, wie zum Beispiel eine Inkjet Einheit erfolgen. Diese erlaubt es, auf der Vorder- oder Rückseite die Druckplatte 6 zu codieren.

Im Anschluss werden die Druckplatten 6 auf einem Plattenwagen 5a, 5b abgelegt. Die Information, dass die Druckplatte 6 auf den Plattenwagen 5a, 5b abgelegt wurde, inklusive der Anordnung, wird im Workflow hinterlegt. Der Plattenwagen 5a, 5b verfügt über eine eindeutige ID im Workflow. Hinter dieser ID sind sämtliche Informationen über die Plattenanordnung hinterlegt.

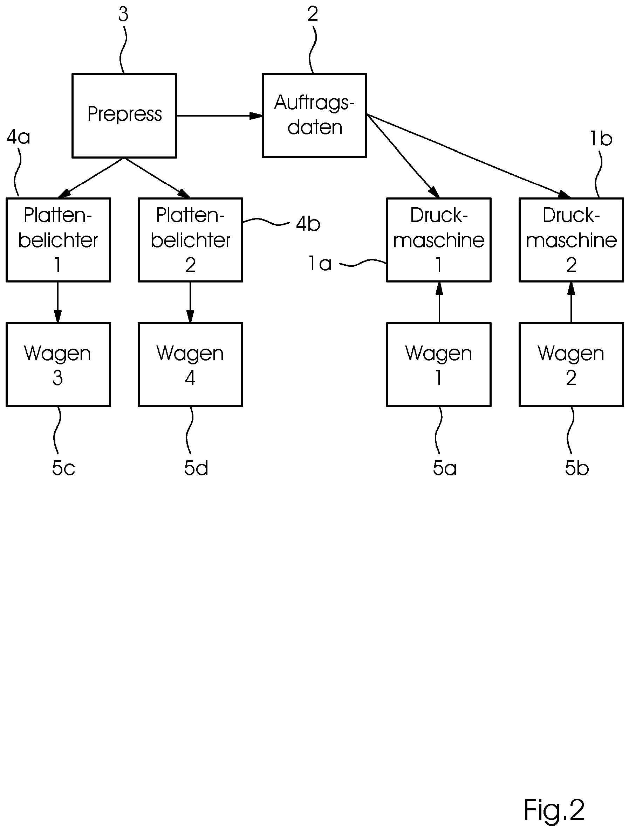

Danach wird der Plattenwagen 5a, 5b zur Druckmaschine 1a, 1b gebracht und über eine der folgenden beschrieben Möglichkeiten an der Druckmaschine 1a, 1b "angemeldet". Figur 2 zeigt hierfür den schematischen Ablauf des zweiten Verfahrensschrittes.

Das Zuordnen des Plattenwagens 5a, 5b, 5c, 5d zur ID erfolgt dabei über verschiedene Optionen. Mindestens eine der folgenden Möglichkeiten muss dabei zur Verfügung stehen:
1. Der Plattenwagen 5a, 5b, 5c, 5d hat einen RFID Chip
2. Der Plattenwagen 5a, 5b, 5c, 5dhat einen Code der maschinenlesbar ist (1D-/2D-Code)
3. Der Plattenwagen 5a, 5b, 5c, 5d hat eine einmalige Nummer / ID die an der Druckmaschinenbedienung eingegeben wird
4. Eine Druckplatte 6 wird gescannt und somit erfolgt die Zuordnung zum ganzen Plattenwagen 5a, 5b, 5c, 5d

Danach lädt die Druckmaschinensteuerung automatisch die Druckauftragsdaten 2 aus dem Workflow in der Reihenfolge, wie der Bediener die Druckplatten 6 vom Plattenwagen 5a, 5b, 5c, 5d entnehmen wird. Parallel erfolgt ein Abgleich ob die Druckplatten 6 auch mit der Anordnung der Farbzuordnung mit den Druckwerken übereinstimmt. Falls hier die Anordnung nicht übereinstimmt erfolgt ein Hinweis für den Bediener.

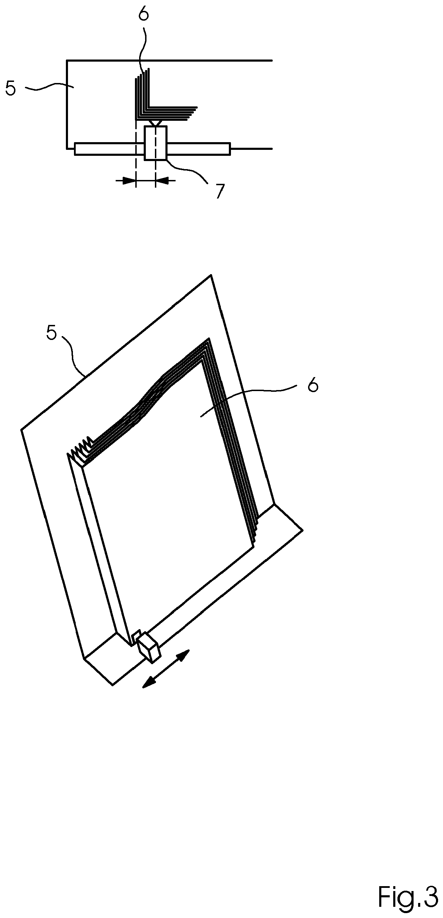

Des Weiteren kann sich in einer weiteren bevorzugten Ausführungsvariante am Plattenwagen 5 ein Sensor 7 befinden der einen Code ausliest und somit das Druckwerk automatisch ansteuert, indem ein Abgleich zu der Farbbelegung erfolgt. Ein Beispiel hierfür wird in Figur 3 dargestellt. Für die Ansteuerung wird der Plattenwagen 5 dabei auf eine Schiene gesetzt oder über eine hängende Fördereinrichtung transportiert. Der Sensor 7 liest den Code der oberen Druckplatte 6 aus, gibt ein Signal an die Fördereinrichtung und steuert das richtige Druckwerk an. Bei Entnahme der oberen Druckplatte 6 wird automatisch der Code darunter ausgelesen und das nächste Druckwerk angesteuert. Dies mindert das Risiko, dass der Bediener die Druckplatte 6 in das falsche Druckwerk stellt. Alternativ oder als Ergänzung kann der Code vor zuführen nochmals am oder im Druckwerk ausgelesen werden. Für das Auslesen kann der mitbelichtete und oder der gedruckte Code verwendet werden.

Die Druckjobs können somit je nach Verfügbarkeit ausgegeben und belichtet werden. Danach funktioniert das Handling wie ein chaotisches Lager. Die Plattenwagen 5, 5a, 5b, 5c, 5d sind in diesem Fall Lagerplätze für Druckplatten 6 und die Druckerei kann diese je nach Verfügbarkeit abrufen. Mit der Synchronisation zu Maschinenbedienung erfolgt dann automatisch die Zuordnung der Druckauftragsdaten 2.

Ähnliche Vorgehensweisen werden in Druckereien durchaus schon umgesetzt. Jedoch wird bei diesen Systemen keine Integration des Datenhandlings in die Druckmaschinenbedienung realisiert. Der Bediener muss daher hier stets noch manuell die Druckaufträge 2 in der richtigen Reihenfolge laden und den Rüstvorgang ohne Hilfe der Maschinenbedienung durchführen, was entsprechende Effizienzverluste bedingt.

### Bezugszeichenliste

- 1a, 1b: Druckmaschinen
- 2: Druckauftragsdaten
- 3: rechnergestützte Prepress / Vorstufe
- 4a, 4b: Plattenbelichter
- 5, 5a, 5b, 5c, 5d: Plattenwagen
- 6: Druckplatten(-stapel)
- 7: Sensor am Plattenwagen

## Patentansprüche

1. Verfahren zur Herstellung von belichteten Druckplatten (6) für einen Druckprozess mindestens einer Offsetdruckmaschine (1a, 1b) durch einen Rechner eines Workflowsystems, wobei der Rechner in der Druckvorstufe (3) Druckauftragsdaten (2) sammelt, daraus dann einen Satz digitaler Farbauszugsdaten zur Erstellung von Druckplatten (6) für die Farbauszüge generiert, diese an mindestens einen Plattenbelichter (4a, 4b) schickt, wo die betreffenden, belichteten Druckplatten (6) erzeugt werden, von wo sie dann als mindestens ein Druckplattenstapel (6) mittels mindestens eines Plattenwagens (5a, 5b, 5c, 5d) zu ihrer jeweiligen, mindestens einen Offsetdruckmaschine (1a, 1b) transportiert werden und wobei die mindestens eine Offsetdruckmaschine (1a, 1b) mit den erzeugten belichteten Druckplatten (6) den Druckprozess durchführt und wobei dem Plattenwagen (5a, 5b, 5c, 5d) eine eindeutige, im Workflowsystem registrierte ID zugewiesen wird, unter welcher im Workflowrechner die Anordnung der erstellten Druckplatten (6) gespeichert ist, der Plattenwagen (5a, 5b, 5c, 5d) bei Ankunft an der Offsetdruckmaschine (1a, 1b) mit seiner ID dort registriert wird, ein Steuerungsrechner der Offsetdruckmaschine (1a, 1b) mittels der ID die Druckauftragsdaten (2) aus dem Workflowsystem lädt und einen Anwender damit zur Durchführung des jeweiligen Druckauftrages (2) anleitet **dadurch gekennzeichnet,**
**dass** der Steuerungsrechner der Offsetdruckmaschine (1a,1b) die Druckauftragsdaten (2) in der Reihenfolge aus dem Workflowsystem lädt, in welcher der Anwender die Druckplatten (6) zur Abarbeitung des Druckauftrages (2) vom jeweiligen Plattenwagen (5a, 5b, 5c, 5d) entnehmen muss und der Steuerungsrechner der Offsetdruckmaschine (1a,1b) parallel überprüft, ob die Reihenfolge der Druckplatten (6) mit der Farbzuordnung von Druckwerken der Offsetdruckmaschine (1a, 1b) übereinstimmt und bei Nichtübereinstimmung den Anwender über optisches oder akustisches Signal darauf hinweist.

2. Verfahren nach Anspruch 1,
**dadurch gekennzeichnet,**
**dass** ein maschinenlesbarer Code auf jede Druckplatte (6) belichtet oder per zusätzlicher Inkjet-Einheit auf jede Druckplatte (6) gedruckt wird, welcher die Information über die Zuweisung zu einem Druckauftrag (2) und zu einem Farbauszug beinhaltet.

3. Verfahren nach Anspruch 2,
**dadurch gekennzeichnet,**
**dass** die Zuweisung des Plattenwagens (5a, 5b, 5c, 5d ) zur ID durch Anbringen eines RFID-Chips am Plattenwagen (5a, 5b, 5c, 5d), durch einen maschinenlesbaren Code am Plattenwagen (5a, 5b, 5c, 5d), durch Eingabe der ID am Steuerungsrechner der Offsetdruckmaschine (1a, 1b) durch den Bediener oder durch Scannen eines maschinenlesbaren Codes auf einer der erstellten Druckplatten (6) geschieht.

4. Verfahren nach einem der vorherigen Ansprüche,
**dadurch gekennzeichnet,**
**dass** die Information, dass eine Druckplatte (6) auf einem Plattenwagen (5a, 5b, 5c, 5d) abgelegt wurde, einschließlich der Information über die Position im Druckplattenstapel (6) auf dem Plattenwagen (5a, 5b, 5c, 5d), auf dem Workflowrechner gespeichert wird.

5. Verfahren nach einem der vorherigen Ansprüche 2 bis 4,
**dadurch gekennzeichnet,**
**dass** der mindestens eine Plattenwagen (5a, 5b, 5c, 5d ) über einen rechnergestützten Sensor (7) verfügt, welcher den maschinenlesbaren Code der obersten auf ihm gelagerten Druckplatte (6) einliest, hinsichtlich Druckauftrag (2) und Farbauszug auswertet und dann das, passende Druckwerk der betreffenden Offsetdruckmaschine (1a,1b) automatisch ansteuert.

6. Verfahren nach Anspruch 5,
**dadurch gekennzeichnet,**
**dass** der mindestens eine Plattenwagen (5a, 5b, 5c, 5d) über ein Schienensystem oder über eine hängende Fördereinrichtung transportiert wird.

## Claims

1. Method of creating exposed printing plates (6) for a printing operation on at least one offset printing press (1a,1b) by means of a computer of a workflow system, wherein the computer collects print job data (2) in the prepress department (3), generates a set of digital colour separation data to create printing plates (6) for the colour separations, forwards them to at least one platesetter (4a, 4b) where the corresponding exposed printing plates (6) are created and from where the printing plates (6) are then transported to their respective at least one offset printing press (1a,1b) as at least one printing plate stack (6) by means of at least one plate carriage (5a, 5b, 5c, 5d), wherein the at least one offset printing press (1a,1b) carries out the printing operation using the generated exposed printing plates (6), wherein the plate carriage (5a, 5b, 5c, 5d) is assigned an unequivocal ID in the workflow system and the arrangement of the created printing plates (6) is saved in the workflow computer under this ID, wherein the plate carriage (5a, 5b, 5c, 5d) is identified upon arrival at the offset printing press (1a,1b) with its machine-readable code, and wherein a control computer of the offset printing press (1a, 1b) loads the print job data (2) from the workflow system by means of the ID and guides a user through the implementation of the respective print job (2), **characterized**
**in that** the control computer of the offset printing press (1a,1b) loads the print job data (2) from the workflow system in an order in which the user must take the printing plates (6) from the respective plate carriage (5a, 5b, 5c, 5d) to process the print job and in that the control computer of the offset printing press (1a,1b) simultaneously checks whether the order of the printing plates (6) matches the colour assignment of printing units of the offset printing press (1a,1b) and outputs a video or audio signal to inform the user in case of a non-match.

2. Method according to claim 1,
**characterized**
**in that** a machine-readable code containing information on the assignment to a print job (2) and to a colour separation is exposed on every printing plate (6) or printed onto every printing plate (6) by means of an additional inkjet unit.

3. Method according to claim 2,
**characterized**
**in that** the assignment of the plate carriage (5a, 5b, 5c, 5d) to the ID is done by applying an RFID tag to the plate carriage (5a, 5b, 5c, 5d), by a machine-readable code on the plate carriage (5a, 5b, 5c, 5d), by an operator's input of the ID at the control computer of the offset printing machine (1a,1b), or by scanning a machine-readable code on one of the created printing plates (6).

4. Method according to any one of the preceding claims,
**characterized**
**in that** the information that a printing plate (6) has been deposited on a plate carriage (5a, 5b, 5c, 5d), including information on the position in the stack (6) on the plate carriage (5a, 5b, 5c 5d) is saved on the workflow computer.

5. Method according to any one of claims 2 to 4,
**characterized**
**in that** the at least one plate carriage (5a, 5b, 5c, 5d) has a computer-assisted sensor (7) which reads the machine-readable code of the uppermost printing plate (6) placed thereon, analyzes it in terms of print job (2) and colour separation and automatically actuates the corresponding printing unit of the corresponding offset printing press (1a, 1b).

6. Method according to claim 5,
**characterized**
**in that** the at least one plate carriage (5a, 5b, 5c, 5d) is transported by means of a rail system or a suspended conveying device.

## Revendications

1. Procédé pour la fabrication de plaques d'impression (6) exposées pour un processus d'impression d'au minimum une machine à imprimer offset (1a, 1b) par un ordinateur d'un système de workflow, l'ordinateur collectant des données de travail d'impression (2) dans le prépresse (3), puis générant à partir de celles-ci un jeu de données numériques de sélection chromatique pour la création de plaques d'impression (6) pour les sélections chromatiques, envoyant celles-ci à au minimum un système de clichage (4a, 4b), où les plaques d'impression (6) exposées concernées sont produites, d'où elles sont ensuite envoyées sous forme d'au minimum une pile de plaques d'impression (6) au moyen d'au minimum un chariot à plaques (5a, 5b, 5c, 5d) à leur au minimum une machine d'impression offset (1a, 1b) et l'au minimum une machine d'impression offset (1a, 1b) exécutant le processus d'impression avec les plaques d'impression (6) exposées produites et un ID univoque, enregistré dans le système de workflow, étant attribué au chariot de plaques (5a, 5b, 5c, 5d), sous lequel la disposition des plaques d'impression (6) produites est mémorisée dans l'ordinateur de workflow, le chariot de plaques (5a, 5b, 5c, 5d) étant enregistré avec son ID à l'arrivée à la machine à imprimer offset (1a, 1b), un ordinateur de commande de la machine d'impression offset (1a, 1b) chargeant les données du travail d'impression (2) à partir du système de workflow au moyen de l'ID et guidant ainsi un utilisateur pour l'exécution du travail d'impression (2) considéré,
**caractérisé en ce**
**que** l'ordinateur de commande de la machine à imprimer offset (1a, 1b) charge les données du travail d'impression (2) à partir du système de workflow dans l'ordre dans lequel l'utilisateur doit retirer les plaques d'impression (6) du chariot de plaques respectif (5a, 5b, 5c, 5d) pour traiter le travail d'impression (2) et l'ordinateur de commande de la machine à imprimer offset (1a, 1b) vérifie en parallèle si l'ordre des plaques d'impression (6) concorde avec l'attribution des couleurs des groupes d'impression de la machine à imprimer offset (1a, 1b) et, en cas de non-concordance, en informe l'utilisateur par un signal optique ou acoustique.

2. Procédé selon la revendication 1,
**caractérisé en ce**
**qu'**un code lisible par la machine est exposé sur chaque plaque d'impression (6) ou imprimé sur chaque plaque d'impression (6) par une unité à jet d'encre supplémentaire, ce code contenant l'information sur l'affectation à un travail d'impression (2) et à une sélection chromatique.

3. Procédé selon la revendication 2,
**caractérisé en ce**
**que** l'affectation du chariot de plaques (5a, 5b, 5c, 5d) à l'ID se fait par l'apposition d'une puce RFID sur le chariot de plaques (5a, 5b, 5c, 5d), par un code lisible par la machine sur le chariot de plaques (5a, 5b, 5c, 5d), par l'entrée de l'ID sur l'ordinateur de commande de la machine à imprimer offset (1a, 1b) par l'opérateur ou par le balayage d'un code lisible par la machine sur l'une des plaques d'impression (6) produites.

4. Procédé selon l'une des revendications précédentes,
**caractérisé en ce**
**que** l'information selon laquelle une plaque d'impression (6) a été déposée sur un chariot de plaques (5a, 5b, 5c, 5d), incluant l'information sur la position dans la pile de plaques d'impression (6) sur le chariot de plaques (5a, 5b, 5c, 5d), est enregistrée sur l'ordinateur du workflow.

5. Procédé selon l'une des revendications 2 à 4 précédentes,
**caractérisé en ce**
**que** le au minimum un chariot de plaques (5a, 5b, 5c, 5d) dispose d'un capteur (7) assisté par ordinateur, qui lit le code lisible par la machine de la plaque d'impression (6) supérieure stockée sur ce chariot, procède à une évaluation relative au travail d'impression (2) et à la sélection chromatique et pilote ensuite automatiquement le groupe d'impression approprié de la machine à imprimer offset (1a, 1b) concernée.

6. Procédé selon la revendication 5,
**caractérisé en ce**
**que** le au minimum un chariot à plaques (5a, 5b, 5c, 5d) est transporté par un système de rails ou par un convoyeur suspendu.
